# EUROPEAN PATENT SPECIFICATION

(11) **EP 3 460 485 B1**
(45) Date of publication and mention of the grant of the patent: **31.03.2021**
(21) Application number: 17799240.1
(22) Date of filing: 10.05.2017
(51) Int. Cl.: B01L 3/00

(54) **FLUID HANDLING DEVICE**
FLUIDHANDHABUNGSVORRICHTUNG
DISPOSITIF DE MANIPULATION DE FLUIDE

(30) Priority: 20.05.2016 JP 2016101461
(43) Date of publication of application: 27.03.2019
(73) Proprietor: Enplas Corporation, Kawaguchi-shi, Saitama 332-0034 (JP)
(72) Inventor: TAKAMATSU, Shota, Kawaguchi-shi, Saitama 332-0034 (JP); NANBA, Chikara, Kawaguchi-shi, Saitama 332-0034 (JP); MURAKI, Koji, Kawaguchi-shi, Saitama 332-0034 (JP)
(74) Representative: Epping - Hermann - Fischer
(86) International application number: PCT/JP2017/017694
(87) International publication number: WO 2017/199815

(56) References cited:
- EP-A1- 1 936 383
- WO-A1-2009/075016
- WO-A2-2005/030033
- DE-A1- 19 810 499
- JP-A- 2000 193 564
- JP-A- 2006 069 547
- JP-A- 2008 261 816
- US-A1- 2007 281 288
- US-A1- 2010 294 811

## Description

### Technical Field

The present invention relates to a fluid handling device.

### Background Art

In recent years, in the field of biochemical analysis, chemical analysis and the like, fluid handling devices such as micro reactors have been used to precisely and speedily analyze trace substances. Document US 2010/294811 A1 discloses a micro droplet operation device to place micro droplets in a reaction well. The reaction well is formed in one surface of a well base. A channel base is placed on the well base. The channel base has, in its surface joined to the well base, a liquid introduction channel and a reaction well air vent channel. Advantageously, such fluid handling devices can operate with a small amount of reagents or samples, and therefore are expected to be used for various uses such as laboratory tests, food tests, and environment tests (e.g. PTL 1).

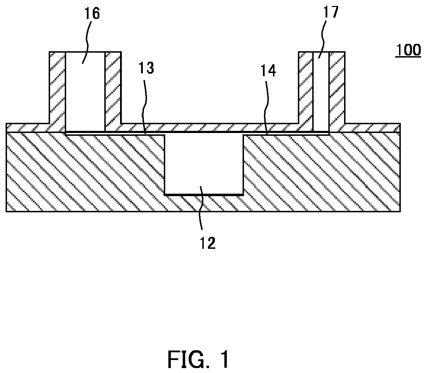

FIG. 1 illustrates an example of such a fluid handling device. Fluid handling device 100 includes housing part 12 for housing fluid, introduction channel 13 connected with housing part 12 and configured to introduce fluid to housing part 12, and suction channel 14 connected with housing part 12 and configured to suck gas in housing part 12 to the outside of fluid handling device 100. In fluid handling device 100, while fluid is supplied from fluid supply port 16 connected with introduction channel 13, gas in housing part 12 is sucked from gas suction port 17 connected with suction channel 14. In this manner, negative pressure is generated in housing part 12, and fluid is efficiently housed in housing part 12.

### Citation List

### Patent Literature

PTL 1 Japanese Patent Application Laid-Open No. 2010-8217

### Summary of Invention

### Technical Problem

When sucking gas from gas suction port 17 in fluid handling device 100 illustrated in FIG. 1, however, not only air in housing part 12, but also fluid being introduced into housing part 12 might also be sucked. In conventional fluid handling device 100, the opening of introduction channel 13 on housing part 12 side, and the opening of suction channel 14 on housing part 12 side are formed at upper end portions of the side surfaces of housing part 12. Therefore, the fluid sucked into housing part 12 from introduction channel 13 might reach the opening of suction channel 14 by moving along the upper edge (the corner of the top surface and the side surface) of housing part 12 by capillary action. In addition, since the opening of introduction channel 13 on housing part 12 side and the opening of suction channel 14 on housing part 12 side are formed at substantially the same height, fluid might easily move on housing part 12 and reach the opening of suction channel 14. For the above-mentioned reasons, in conventional fluid handling device 100, a large amount of fluid is wasted, and it is difficult to efficiently house a desired amount of fluid into the housing part.

In view of this, an object of the present invention is to provide a fluid handling device which can efficiently house fluid into the housing part without wasting the fluid.

### Solution to Problem

The object is solved by a fluid handling device according to appended claim 1. The fluid handling device according to the present invention is configured to house fluid in a housing part, the fluid handling device including: the housing part including a side surface and a bottom surface, and configured to house fluid; an introduction channel configured to carry fluid toward the housing part; a fluid guiding part connected with an opening of the introduction channel in the housing part, and configured to carry, toward the bottom surface of the housing part, fluid from the introduction channel; and a suction channel including an opening at the side surface of the housing part, wherein the fluid is liquid and the fluid guiding part is a member having a semi-columnar shape or a prism shape disposed on the side surface of the housing part; and wherein a cutout is formed in the fluid guiding part, so that the fluid guiding part can be bent or folded by a needle or the like toward the side surface of the housing part.

### Advantageous Effects of Invention

The fluid handling device according to embodiments of the present invention can efficiently house fluid into the housing part without wasting the fluid.

### Brief Description of Drawings

FIG. 1 is a schematic sectional view of a conventional fluid handling device;
FIG. 2A is a front view of a fluid handling device according to Embodiment 1 of the present invention, FIG. 2B is a plan view of the fluid handling device, FIG. 2C is a side view of the fluid handling device, and FIG. 2D is a sectional view taken along line A-A of FIG 2B;
FIG. 3A is a plan view of a substrate main body of the fluid handling device according to Embodiment 1, FIG. 3B is a bottom view of the substrate main body, and FIG. 3C is a sectional view taken along line B-B of FIG. 3A;
FIG. 4A is a front view of a fluid handling device according to Embodiment 2 of the present invention, FIG. 4B is a plan view of the fluid handling device, FIG. 4C is a right side view of the fluid handling device, and FIG. 4D is a sectional view taken along line A-A of FIG. 4B;
FIG. 5A is a plan view of a substrate main body of the fluid handling device according to Embodiment 2, FIG. 5B is a bottom view of the substrate main body, and FIG. 5C is a sectional view taken along line B-B of FIG. 5A;
FIG. 6A is a front view of a fluid handling device according to Embodiment 3 of the present invention, FIG. 6B is a plan view of the fluid handling device, FIG. 6C is a right side view of the fluid handling device, and FIG. 6D is a sectional view taken along line A-A of FIG. 6B; and
FIG. 7A is a plan view of a substrate main body of the fluid handling device according to Embodiment 3, FIG. 7B is a sectional view taken along line B-B of FIG. 7A, and FIG. 7C is a partially enlarged view of a part indicated with the broken line in FIG. 7A.

### Description of Embodiments

The present invention relates to a fluid handling device for housing fluid in a housing part. As used herein, "fluid" is a liquid material having fluidity which is sufficiently heavier than air. To be more specific, examples of the fluid include various types of liquid, a solution containing a solid dissolved in a solvent, a dispersion liquid including a solid dispersed in a dispersing medium, and the like.

Embodiments of the present invention are elaborated below with reference to the accompanying drawings. The present invention is not limited to the following embodiments.

### Embodiment 1

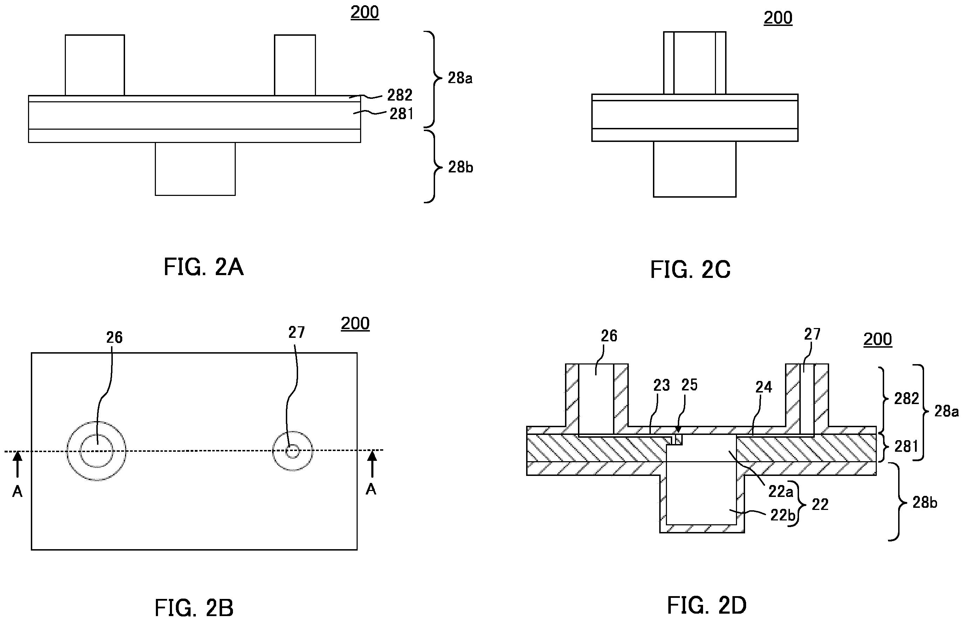

FIG. 2 illustrates a fluid handling device of Embodiment 1. FIG. 2A is a front view of fluid handling device 200 of Embodiment 1, FIG. 2B is a plan view of fluid handling device 200, FIG. 2C is a right side view of fluid handling device 200, and FIG. 2D is a sectional view taken along line A-A of FIG. 2B.

As illustrated in FIG. 2D, fluid handling device 200 of the present embodiment includes housing part 22 for housing fluid, fluid supply port 26 for supplying fluid into fluid handling device 200, and introduction channel 23 connected with liquid supply port 26 and housing part 22 and configured to carry fluid toward housing part 22. Further, fluid handling device 200 includes gas suction port 27 for sucking gas in housing part 22 to the outside of fluid handling device 200, and suction channel 24 connected with gas suction port 27 and housing part 22 and configured to suck gas in housing part 22. In addition, fluid handling device 200 includes, in housing part 22, fluid guiding part 25 connected with an opening of introduction channel 23 and configured to carry, toward the bottom surface of housing part 22, fluid from introduction channel 23. In fluid handling device 200 of the present embodiment, airtightness of housing part 22 is ensured such that gas and/or fluid is not sucked from the inside of housing part 22, or gas and/or fluid does not enter housing part 22 from a portion other than fluid supply port 26 and gas suction port 27.

Here, as illustrated in FIG. 2A and FIG. 2D, fluid handling device 200 of the present embodiment is composed of two substrates, first substrate 28a and second substrate 28b, and housing part 22 is composed of first housing part 22a of first substrate 28a and second housing part 22b of second substrate 28b. Second housing part 22b includes the bottom surface of housing part 22. Below, first substrate 28a and second substrate 28b of fluid handling device 200 of the present embodiment are described.

### First substrate

As illustrated in FIG. 2D, first substrate 28a of the present embodiment includes fluid supply port 26, introduction channel 23, fluid guiding part 25, first housing part 22a, suction channel 24, and gas suction port 27.

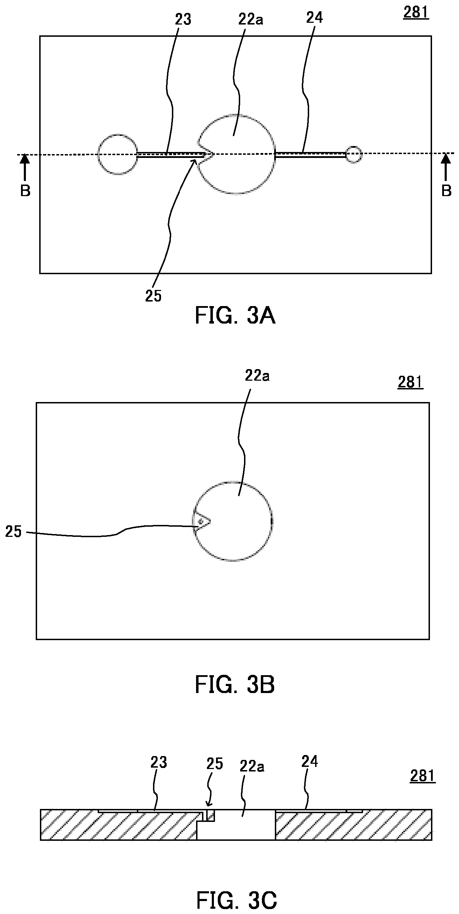

First substrate 28a is composed of substrate main body 281 and closure 282 in view of ease of manufacturing as illustrated in FIG. 2A in the present embodiment, but first substrate 28a may be composed of a single member. FIG. 3A is a plan view of substrate main body 281, FIG. 3B is a bottom view of substrate main body 281, and FIG. 3C is a sectional view taken along line B-B of FIG. 3A.

As illustrated in FIG. 2D, one end portion of introduction channel 23 of first substrate 28a is connected with fluid supply port 26 of closure 282, and the other end portion of introduction channel 23 of first substrate 28a is open at the side surface of first housing part 22a. In the present embodiment, introduction channel 23 is composed of a groove formed in a surface of substrate main body 281 on closure 282 side, and the bottom surface of closure 282 that seals an opening of the groove.

As illustrated in FIG. 2D and FIG. 3C, introduction channel 23 may be parallel to the placing surface of fluid handling device 200, or may be tilted at a predetermined angle to the placing surface of fluid handling device 200. In addition, introduction channel 23 may be a linear channel, or may be a curved channel. Also, the cross-sectional shape of introduction channel 23 is not limited, and may be a semicircular shape, a rectangular shape, a circular shape or the like. In addition, fluid introduction channel 23 needs only to have a cross-sectional area which allows fluid to fill fluid introduction channel 23.

On the other hand, fluid guiding part 25 is a member that covers an opening of introduction channel 23 in the side surface of first housing part 22a, and guides, toward the bottom surface of housing part 22, the fluid flowing from the opening of introduction channel 23 into housing part 22. As illustrated in FIG. 3A to FIG. 3C, fluid guiding part 25 of the present embodiment is a member having a substantially triangular prism shape disposed on a side surface of first housing part 22a, and includes a through hole extending in a direction from the opening of introduction channel 23 to the bottom surface of housing part 22. In fluid handling device 200 of the present embodiment, the fluid flowing from an end portion (opening) of introduction channel 23 on first housing part 22a side into housing part 22 moves toward the bottom surface of housing part 22 through the through hole of the fluid guiding part 25.

In the present embodiment, the opening of the through hole of fluid guiding part 25 on the bottom surface side of housing part 22 is located away from the side surface of first housing part 22a by a prescribed distance. If the opening of the through hole is in contact with the side surface (inner wall surface) of housing part 22a, the fluid discharged from the opening of the through hole easily adheres to the side surface of first housing part 22a, and can move on the side surface toward suction channel 24. In contrast, when the opening of the through hole on the bottom surface side of housing part 22 and the side surface of first housing part 22a are separated from each other by a prescribed distance, adherence of the fluid to the side surface of first housing part 22a is suppressed, and the movement toward the bottom surface of housing part 22 with gravity is facilitated. While the opening of the through hole of fluid guiding part 25 on the bottom surface side of housing part 22 is located away from the side surface of first housing part 22a by a prescribed distance as described above in the present embodiment, the present invention is not limited to this. The present invention is not limited to such a configuration as long as the fluid entering housing part 22 from the opening of the through hole tends to move toward the bottom surface side rather than to move on the upper part of the side surface of housing part 22 in the circumferential direction even when the opening of the through hole is in contact with the side surface of first housing part 22a.

While it is preferable that the through hole of fluid guiding part 25 be substantially perpendicular to the placing surface of fluid handling device 200 in view of efficiently carrying fluid, the through hole may be tilted to the vertical direction of the placing surface of fluid handling device 200 at a prescribed angle.

In addition, the size of the through hole of fluid guiding part 25 is not limited as long as fluid can flow without stopping. Also, the length of the through hole in fluid guiding part 25 (the height of fluid guiding part 25) is not limited as long as fluid can flow toward the bottom surface of housing part 22. While fluid guiding part 25 is composed of a substantially triangular prism member in FIG. 3, the shape of fluid guiding part 25 is not limited to that shape. For example, fluid guiding part 25 may have a semi-columnar shape, a prism shape, or the like. Also, the cross-sectional shape of the through hole is not limited to the circular shape, and may be a semicircular shape, a rectangular shape, or the like.

In some situation, in fluid handling device 200 of the present embodiment, the fluid housed in housing part 22 is collected by inserting a needle or the like into housing part 22 from closure 282 side after the fluid is housed in housing part 22, and therefore, it is preferable that fluid guiding part 25 do not block the entry of the needle or the like. In view of this, a cutout (not illustrated) or the like is formed in fluid guiding part 25 so that fluid guiding part 25 can be bent or folded by a needle or the like toward the side surface of housing part 22.

In addition, as illustrated in FIG. 2D, first housing part 22a of first substrate 28a is a space having a recess-like shape defined by the side surface of the through hole of substrate main body 281, and closure 282. The opening of first housing part 22a on second substrate 28b side is connected with the opening of second housing part 22b of second substrate 28b described later. In addition, fluid guiding part 25 and an opening of suction channel 24 are disposed in the side surface of first housing part 22a, and first housing part 22a is communicated with the through hole of fluid guiding part 25 and the opening of suction channel 24. The shape of first housing part 22a is not limited as long as the shape of the opening is identical to the shape of the opening of second housing part 22b of second substrate 28b, and the shape of first housing part 22a may be appropriately selected in accordance with the capacity for fluid and the like.

In addition, as illustrated in FIG. 2D, one end portion of suction channel 24 is connected with gas suction port 27 of closure 282, and the other end portion of suction channel 24 is open at the side surface of first housing part 22a. In the present embodiment, suction channel 24 is composed of a groove formed in the surface of substrate main body 281 on closure 282 side, and the bottom surface of closure 282 that seals the opening of the groove.

As illustrated in FIG. 2D and FIG. 3C, suction channel 24 may be parallel to the placing surface of fluid handling device 200, or may be tilted to the placing surface of fluid handling device 200 at a predetermined angle. In addition, suction channel 24 may be a linear channel, or a curved channel. In addition, the cross-sectional shape of suction channel 24 is not limited, and may be a semicircular shape, a rectangular shape, a circular shape, or the like. In addition, the cross-sectional area of suction channel 24 is not limited as long as the gas in housing part 22 can be sufficiently sucked. By setting the cross-sectional area of the opening of suction channel 24 to a cross-sectional area larger than that of the introduction channel 23, suction of fluid from suction channel 24 can be suppressed.

In addition, in fluid handling device 200 of the present embodiment, the distance from the bottom surface of housing part 22 to fluid guiding part 25 (here, the distance from the bottom surface of housing part 22 to the opening of fluid guiding part 25 on housing part 22 side) is shorter than the distance from the bottom surface of housing part 22 to the opening of suction channel 24 on housing part 22 side. When the distance from bottom surface of housing part 22 to fluid guiding part 25 is shorter, the fluid does not easily reach suction channel 24 even when the fluid moves on the side surface of housing part 22, and thus suction of the fluid from suction channel 24 is suppressed.

In addition, the shape and the like of fluid supply port 26 are not limited as long as supply port 26 is connected with introduction channel 23 and can supply fluid. For example, it is possible to provide a filter (not illustrated) for supplying only a specific component contained in liquid and/or solid to introduction channel 23. Further, fluid supply port 26 may function as a well for temporarily housing liquid.

In addition, the structure of gas suction port 27 is not limited as long as gas suction port 27 is connected with suction channel 24 and can suck gas of housing part 22 to the outside of fluid handling device 200. For example, gas suction port 27 may have a shape which allows for connection with a vacuum pump (not illustrated) and the like.

Here, first substrate 28a needs only to be formed of a material having a stability against fluid, and may be composed of a resin molded body, for example. In an example of the method of producing first substrate 28a, substrate main body 281 and closure 282 are shaped by a publicly known method, and then substrate main body 281 and closure 282 are fixed by heat fusing, an adhesive agent (e.g. heat/ultraviolet curable resin) and/or the like.

### Second substrate

As illustrated in FIG. 2D, second substrate 28b needs only to include second housing part 22b for housing fluid. As illustrated in FIG. 2D, second substrate 28b may be a protruding member, or a plate-shaped member.

Second housing part 22b is a space having a recess-like shape including a bottom surface provided in second substrate 28b. An opening of second housing part 22b on first substrate 28a side is connected with the opening of first housing part 22a of first substrate 28a. The shape of second housing part 22b is not limited as long as the shape of the opening is identical to the shape of the opening of first housing part 22a of first substrate 28a, and the shape of second housing part 22b may be appropriately selected in accordance with capacity for fluid and the like.

Here, second substrate 28b needs only to be formed of a material having stability against fluid, and may be composed of a resin molded body, for example. In addition, second substrate 28b may be fixed to first substrate 28a by a publicly known method such as heat fusing and an adhesive agent (e.g. heat/ultraviolet curable resin).

### Method of housing fluid

Now a method of housing fluid into housing part 22 with fluid handling device 200 of the present embodiment is described. In fluid handling device 200 of the present embodiment, first, fluid is introduced to fluid supply port 26. Then, gas in housing part 22 is sucked from gas suction port 27. In this manner, the pressure in housing part 22 is reduced, and the fluid supplied to fluid supply port 26 is sucked and housed into housing part 22 through introduction channel 23 and fluid guiding part 25. The gas may be continuously sucked or intermittently sucked.

### Effect

In conventional fluid handling device 100, the opening of introduction channel 13 on housing part 12 side and the opening of suction channel 14 on housing part 12 side are formed at the upper end of housing part 12 as illustrated in FIG. 1. Therefore, a part of the fluid sucked from introduction channel 13 into housing part 12 moves along the upper edge portion of housing part 12 and reaches the opening of suction channel 14, and consequently the fluid is easily sucked to the outside of fluid handling device 100 together with gas. As a result, a large amount of fluid is wasted, and it is difficult to efficiently house a desired amount of fluid into housing part 12.

In contrast, in fluid handling device 200 of the present embodiment, fluid discharged from introduction channel 23 is guided by fluid guiding part 25 toward the bottom surface side of housing part 22 as illustrated in FIG. 2D. Therefore, the fluid does not easily adhere to the upper wall part and/or the upper edge portion of housing part 22, and thus does not easily reach an opening of suction channel 24. Further, in housing part 22, an opening of suction channel 24 is formed at a position higher than the opening of fluid guiding part 25, and therefore the fluid sucked from fluid guiding part 25 does not easily reach the opening of suction channel 24 even when the fluid moves on wall of housing part 22. Accordingly, in fluid handling device 200 of the present embodiment, the fluid is not easily sucked to the outside of fluid handling device 200. That is, the fluid can be efficiently housed into housing part 22 without wasting the fluid.

### Embodiment 2

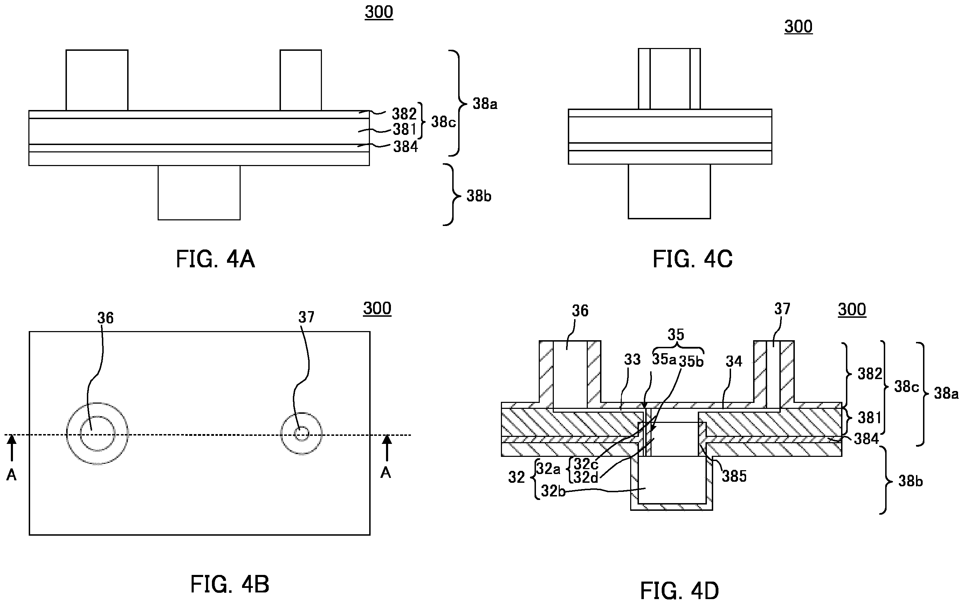

FIG. 4 illustrates a fluid handling device of Embodiment 2. FIG. 4A is a front view of fluid handling device 300 of Embodiment 2, FIG. 4B is a plan view of fluid handling device 300, FIG. 4C is a right side view of fluid handling device 300, and FIG. 4D is a sectional view taken along line A-A of FIG. 4B.

As illustrated in FIG. 4D, fluid handling device 300 of the present embodiment includes housing part 32 for housing fluid, fluid supply port 36 for supplying fluid into fluid handling device 300, and introduction channel 33 connected with liquid supply port 36 and configured to carry fluid toward housing part 32. Further, fluid handling device 300 includes gas suction port 37 for sucking gas in housing part 32 to the outside of fluid handling device 300, and suction channel 34 connected with gas suction port 37 and housing part 32 and configured to suck gas in housing part 32. In addition, inside housing part 32, fluid guiding part 35 connected with an opening of introduction channel 33 and configured to carry, toward the bottom surface of housing part 32, fluid from introduction channel 33 is provided. In fluid handling device 300 of the present embodiment, the airtightness of housing part 32 is ensured such that gas and/or fluid is not sucked from housing part 32 or gas and/or fluid does not enter housing part 32 from a portion other than fluid supply port 36 or gas suction port 37.

While fluid handling device 300 of the present embodiment is composed of two substrates, first substrate 38a and second substrate 38b as illustrated in FIG. 4A and FIG. 4D, second substrate 38b may be similar to second substrate 28b of Embodiment 1, and therefore the description thereof is omitted. In addition, also in the present embodiment, housing part 32 is composed of first housing part 32a of first substrate 38a and second housing part 32b of second substrate 38b. Below, first substrate 38a of the present embodiment is described.

### First substrate

As illustrated in FIG. 4D, first substrate 38a of the present embodiment includes third substrate 38c and coupling member 384. As illustrated in FIG. 4D, third substrate 38c includes fluid supply port 36, introduction channel 33, fluid guiding part 35, third housing part 32c, suction channel 34, and gas suction port 37.

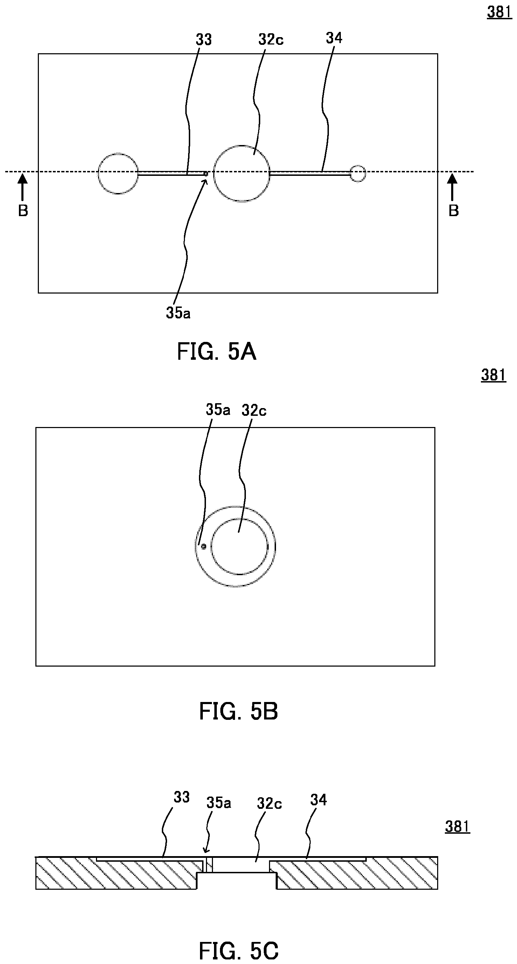

While third substrate 38c may be composed of a single member, third substrate 38c is composed of substrate main body 381 and closure 382 in the present embodiment as illustrated in FIG. 4D in view of ease of manufacturing. FIG. 5A is a plan view of substrate main body 381, FIG. 5B is a bottom view of the substrate main body 381, and FIG. 5C is a sectional view taken along line B-B of FIG. 5A. Here, fluid supply port 36, introduction channel 33, third housing part 32c, suction channel 34, and gas suction port 37 of third substrate 38c (substrate main body 381 and closure 382) are identical to fluid supply port 26, introduction channel 23, first housing part 22a, suction channel 24, and gas suction port 27 of first substrate 28a (substrate main body 281 and closure 282) of Embodiment 1, respectively. In view of this, description thereof is omitted, and fluid guiding part 35 and coupling member 384 of first substrate 38a are described below.

As illustrated in FIG. 4D, fluid guiding part 35 is a cylindrical channel disposed to cover the opening of introduction channel 33 on third housing part 32c side. Fluid guiding part 35 is composed of first fluid guiding part 35a provided in third housing part 32c, and second fluid guiding part 35b provided in fitting part 385 of coupling member 384. In fluid handling device 300 of the present embodiment, the fluid flowing from the end portion (opening) of introduction channel 33 on third housing part 32c side moves toward the bottom surface of housing part 32 through first fluid guiding part 35a and second fluid guiding part 35b.

While it is preferable that the channel in fluid guiding part 35 is approximately perpendicular to the placing surface of fluid handling device 300 in view of efficiently carrying fluid, the channel in fluid guiding part 35 may be tilted to the vertical direction of the placing surface of fluid handling device 300 at a prescribed angle. In addition, each of first fluid guiding part 35a and second fluid guiding part 35b needs only to be a member including a channel having a predetermined width, and the external shape thereof is not limited.

In addition, the cross-sectional area of the channel in fluid guiding part 35 is not limited as long as fluid can flow therethrough without stopping, and the cross-sectional area of the channel in fluid guiding part 35 is appropriately selected in accordance with the type of the fluid to be supplied to fluid handling device 300. Also, the cross-sectional shape of the channel in fluid guiding part 35 is not limited, and may be a circle, a semicircle, a rectangular or the like for example. Further, the channel length of fluid guiding part 35 is appropriately set in accordance with the thickness of substrate main body 381 and/or the thickness of coupling member 384.

Here, also in fluid handling device 300 of the present embodiment, the distance from the bottom surface of housing part 32 to fluid guiding part 35 (here, the distance from the bottom surface of housing part 32 to the opening of second fluid guiding part 35 on housing part 22 side) is shorter than the distance from the bottom surface of housing part 32 to the opening of suction channel 34 on housing part 32 side. With the configuration in which the distance from the bottom surface of housing part 32 to fluid guiding part 35 is shorter, even the fluid moving on the side surface of housing part 32 does not easily reach the opening of fluid suction channel 34 on housing part 32 side, and is not easily sucked from suction channel 34.

On the other hand, coupling member 384 of the present embodiment includes fitting part 385, fourth housing part 32d formed in fitting part 385, and second fluid guiding part 35b formed in fitting part 385.

Fitting part 385 is a member for coupling third substrate 38c and second substrate 38b together, and fitting part 385 is a member having an outer diameter equal to the inner diameter of third housing part 32c of third substrate 38c and second housing part 32b of second substrate 38b. The shape of fitting part 385 is appropriately selected in accordance with the shape of third housing part 32c and second housing part 32b, and the shape for fitting inside third housing part 32c and the shape for fitting inside second housing part 32b may be identical or different.

In addition, fourth housing part 32d is composed of a through hole provided in fitting part 385, and fourth housing part 32d is connected with third housing part 32c of third substrate 38c and second housing part 32b of the second substrate, and forms housing part 32 of fluid handling device 300 of the present embodiment. The side wall of the third housing part 32c includes a recess for fitting fitting part 385. In view of this, the opening of fourth housing part 32d on third housing part 32c side is smaller than the opening of third housing part 32c on coupling member 384 side. Likewise, the side wall of second housing part 32b includes a recess for fitting fitting part 385. In view of this, the opening of fourth housing part 32d is smaller than the opening of second housing part 32b on first substrate 38a side.

In addition, in fitting part 385 of coupling member 384, second fluid guiding part 35b, which is a part of fluid guiding part 35, is disposed. As described above, second fluid guiding part 35b needs only to include a channel for carrying fluid, and the shape of second fluid guiding part 35b is not limited.

Here, the third substrate 38c and coupling member 384 need only to be formed of a material having stability against fluid, and third substrate 38c may be composed of a resin molded body, for example. Examples of the method of producing third substrate 38c include a method in which substrate main body 381 and closure 382 are shaped by a publicly known method, and substrate main body 381 and closure 382 are fixed to each other by fusing, an adhesive agent (e.g. heat/ultraviolet curable resin) and/or the like. On the other hand, preferably, coupling member 384 is composed of an elastic body such as rubber. With coupling member 384 having elasticity, second substrate 38b can be detachably attached to first substrate 38a.

In addition, coupling member 384 can be attached to third substrate 38c by fitting fitting part 385 of coupling member 384 inside third housing part 32c of third substrate 38c. Likewise, first substrate 38a can be attached to second substrate 38b by fitting fitting part 385 of coupling member 384 to second housing part 32b of second substrate 38b.

### Method of housing fluid

Also in fluid handling device 300 of the present embodiment, the gas in housing part 32 is sucked from gas suction port 37 in the state where fluid is introduced in fluid supply port 36. In this manner, the pressure inside housing part 32 is reduced, and the fluid supplied to fluid supply port 36 is efficiently housed in housing part 32. It is to be noted that, in the present embodiment, it is preferable to use fluid whose surface tension is high. For example, in the present embodiment, it is preferable to use silicone oil (having a surface tension of about 20 m N/m), and it is more preferable to use water (having a surface tension of about 70 m N/m). When reaching housing part 32 from introduction channel 33, such fluid tends to move to the bottom surface side with gravity rather than to move on the inner wall in the circumferential direction by capillary action, and therefore the capillary action in the circumferential direction is not easily generated at the joining part of fluid guiding part 35 and the wall surface of housing part 32, and the fluid can be surely housed in housing part 32.

### Effect

In fluid handling device 300 of the present embodiment, the fluid past introduction channel 33 is guided by fluid guiding part 35 toward the bottom surface of housing part 32 side as illustrated in FIG. 4D. Therefore, the fluid sucked into housing part 32 does not easily adhere to the edge and the wall of the upper part of housing part 32, and does not easily reach the opening of suction channel 34. In addition, in housing part 32, the opening of suction channel 34 is formed at a position higher than the opening of fluid guiding part 35, and thus the fluid sucked from fluid guiding part 35 does not easily reach the opening of suction channel 34 on housing part 32 side even when the fluid moves along the wall of housing part 32. Accordingly, with fluid handling device 300 of the present embodiment, the fluid is not easily sucked to the outside of fluid handling device 300. That is, the fluid can be efficiently housed into housing part 32 without wasting the fluid.

Further, in fluid handling device 300 of the present embodiment, second substrate 38b is detachably attached to first substrate 38a. Therefore, the fluid housed in second housing part 32b of second substrate 38b can be readily collected.

### Embodiment 3

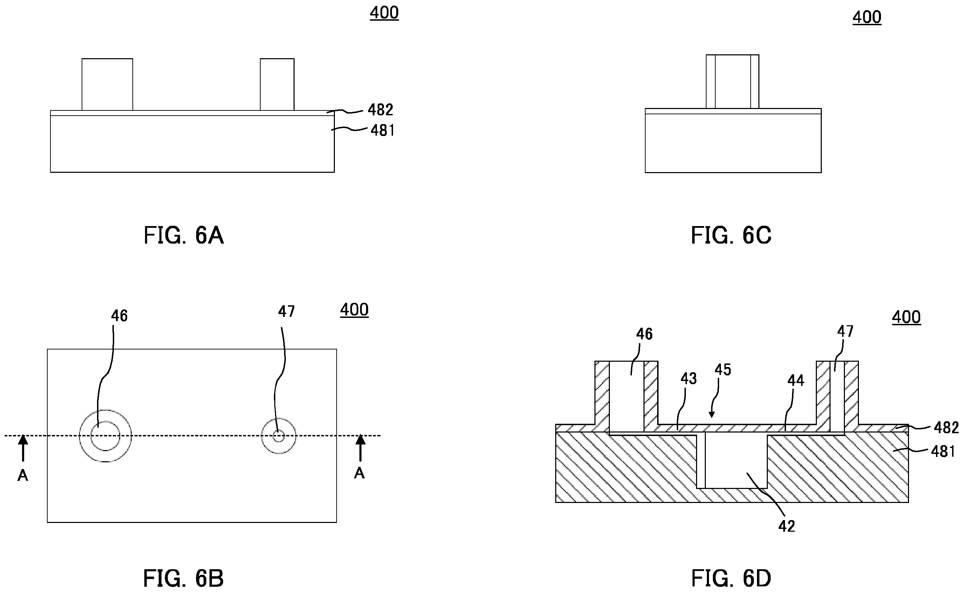

A fluid handling device of Embodiment 3 is illustrated in FIGS. 6A to 6D. FIG. 6A is a front view of fluid handling device 400 of Embodiment 3, FIG. 6B is a plan view of fluid handling device 400, FIG. 6C a right side view of fluid handling device 400, and FIG. 6D is a sectional view taken along line A-A of FIG. 6B.

As illustrated in FIG. 6A and FIG. 6D, fluid handling device 400 of the present embodiment includes housing part 42 for housing fluid, fluid supply port 46 for supplying fluid into fluid handling device 400, and introduction channel 43 connected with liquid supply port 46 and configured to carry fluid toward housing part 42. Further, fluid handling device 400 includes gas suction port 47 for sucking gas in housing part 42 to the outside of fluid handling device 400, and suction channel 44 connected with gas suction port 47 and housing part 42 and configured to suck gas in housing part 42. Also, fluid handling device 400 includes, in housing part 42, fluid guiding part 45 connected with the opening of introduction channel 43 and configured to carry, toward the bottom surface of housing part 42, fluid from introduction channel 43. In fluid handling device 400 of the present embodiment, the airtightness of housing part 42 is ensured such that gas and/or fluid is not sucked from the inside of housing part 42, or gas and/or fluid does not enter supply port 46, or gas and/or fluid does not enter from a portion other than housing part 42 or gas suction port 47.

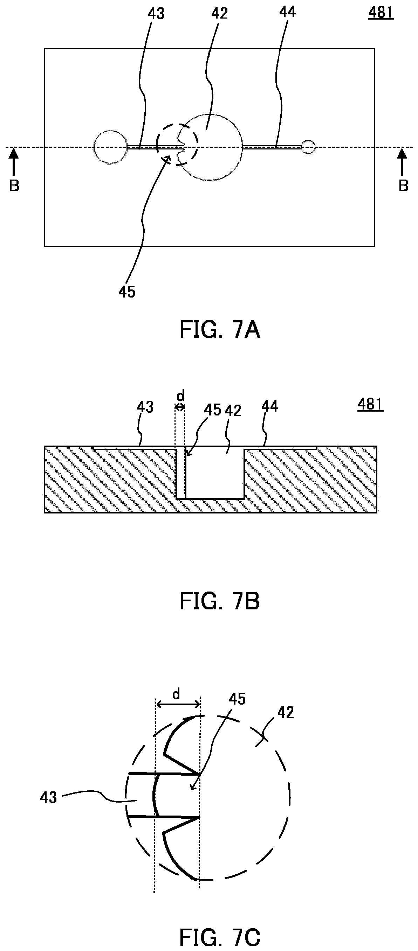

As illustrated in FIG. 6A and FIG. 6D, fluid handling device 400 of the present embodiment is composed of two members, substrate main body 481 and closure 482. FIG. 7A is a plan view of body 481, and FIG. 7B is a sectional view of the substrate main body 481 taken along line B-B.

Here, fluid supply port 46, introduction channel 43, suction channel 44, fluid supply port 46, and gas suction port 47 of fluid handling device 400 of the present embodiment are identical to fluid supply port 26, introduction channel 23, suction channel 24, fluid supply port 26, and gas suction port 27 of first substrate 28a of Embodiment 1. In view of this, description thereof is omitted, and housing part 42 and fluid guiding part 45 of the present embodiment are described below.

Housing part 42 of the present embodiment is a space defined by the side surface and the bottom surface of a recess provided in substrate main body 481, and the bottom surface of closure 482. Fluid guiding part 45, an opening of introduction channel 43, and an opening of suction channel 44 are disposed as described later in the side surface of housing part 42, and housing part 42 is connected with the opening of introduction channel 43 and the opening of suction channel 24. Here, the shape of housing part 42 is not limited as long as fluid can be housed inside, and is appropriately selected in accordance with the capacity for fluid and the like.

On the other hand, as illustrated in FIG. 7A and FIG. 7B, fluid guiding part 45 of the present embodiment is a groove extending from the opening of introduction channel 43 on housing part 42 side toward the bottom surface of housing part 42. FIG. 7C is a partially enlarged view of a part indicated with the broken line in FIG. 7A. As illustrated in FIG. 7B and FIG. 7C, fluid guiding part 45 is a groove having an opening on housing part 42 side, and the fluid flowing from the opening of introduction channel 43 moves along the fluid guiding part 45 toward the bottom surface of housing part 42 side. The depth of the groove that is fluid guiding part 45 (the length represented by d in FIG. 7B and FIG. 7C) is appropriately selected in accordance with the amount of fluid supplied to introduction channel 43.

Here, substrate main body 481 and closure 482 of fluid handling device 400 of the present embodiment need only to be formed of a material having stability against fluid, and may be composed of a resin molded body, for example. In an example of the method of producing fluid handling device 400 of the present embodiment, substrate main body 481 and closure 482 are shaped by a publicly known method, and substrate main body 481 and closure 482 are fixed by fusing, an adhesive agent (e.g. heat/ultraviolet curable resin) and/or the like.

### Method of housing fluid

Also in fluid handling device 400 of the present embodiment, the gas in housing part 42 is sucked from gas suction port 47 in the state where fluid is introduced into fluid supply port 46. In this manner, the pressure inside housing part 42 is reduced, and the fluid supplied to fluid supply port 46 is efficiently housed into housing part 42.

### Effect

In fluid handling device 400 of the present embodiment, the fluid past introduction channel 43 is guided by fluid guiding part 45 toward the bottom surface of housing part 42 as illustrated in FIG. 6D. Therefore, the fluid sucked into housing part 42 does not easily adhere to the edge and the wall of the upper part of housing part 42, and does not easily reach the opening of suction channel 44 on housing part 42 side. Accordingly, with fluid handling device 400 of the present embodiment, the fluid is not easily sucked to the outside of fluid handling device 400. That is, the fluid can be efficiently housed into housing part 42 without wasting the fluid.

### Industrial Applicability

With the fluid handling device of the embodiments of the present invention, a desired amount of fluid can be efficiently housed into the housing part. Accordingly, the fluid handling device of the embodiments of the present invention can be used for various uses such as laboratory tests, food tests, and environment tests.

### Reference Signs List

100, 200, 300, 400 Fluid handling device
12, 22, 32, 42 Housing part
22a, 32a First housing part
22b, 32b Second housing part
32c Third housing part
32d Fourth housing part
13, 23, 33, 43 Introduction channel
14, 24, 34, 44 Suction channel
25, 35, 45 Fluid guiding part
16, 26, 36, 46 Fluid supply port
17, 27, 37, 47 Gas suction port
28a, 38a First substrate
28b, 38b Second substrate
38c Third substrate
281, 381, 481 Substrate main body
282, 382, 482 Closure
384 Coupling member
385 Fitting part

## Claims

1. A fluid handling device (200, 300) configured to house fluid in a housing part (22, 32), the fluid handling device (200, 300) comprising:
the housing part (22, 32) including a side surface and a bottom surface, and configured to house the fluid;
an introduction channel (23, 33) configured to carry the fluid toward the housing part (22, 32);
a fluid guiding part (25, 35) connected with an opening of the introduction channel (23, 33) in the housing part (22, 32), and configured to carry, toward the bottom surface of the housing part (22, 32), the fluid from the introduction channel (23, 33); and
a suction channel (24, 34) including an opening at the side surface of the housing part (22,32), wherein the fluid is liquid, **characterized in that**
the fluid guiding part (25, 35) is a member having a semi-columnar shape or a prism shape disposed on the side surface of the housing part (22, 32); and
a cutout is formed in the fluid guiding part (25, 35), so that the fluid guiding part can be bent or folded by a needle or the like toward the side surface of the housing part.

2. The fluid handling device (200, 300) according to claim 1,
wherein the fluid handling device (200, 300) has a structure in which a first substrate (28a, 38a) and a second substrate (28b, 38b) are stacked, the first substrate (28a, 38b) including the introduction channel (23, 33), the fluid guiding part (25, 35), the suction channel (24, 34), and a first housing part (22a, 32a), the second substrate (28b, 38b) including a second housing part (22b, 32b) including the bottom surface; and
wherein the housing part (22, 32) includes the first housing part (22a, 32a) and the second housing part (22b, 32b).

3. The fluid handling device (200, 300) according to claim 2, wherein the second substrate (28b, 38b) is detachably attached on the first substrate (28a, 38a).

4. The fluid handling device (300) according to claim 3,
wherein the first substrate (38a) includes:
a third substrate (38c) including the introduction channel (33), the fluid guiding part (35), the suction channel (34), and a third housing part (32c), and
a coupling member (384) including a fitting part (385), a fourth housing part (32d), and a second guiding part (35b) formed in the fitting part (385), the fitting part (385) being fitted to the third housing part (32c) of the third substrate (38c) and the second housing part (32b) of the second substrate (38b); and
wherein the first housing part (32a) includes the third housing part (32c) and the fourth housing part (32d).

5. The fluid handling device (200, 300) according to any one of claims 1 to 4, wherein a distance from the bottom surface of the housing part to the fluid guiding part (25, 35) is shorter than a distance from the bottom surface of the housing part (22, 32) to the opening of the suction channel (24, 34).

6. The fluid handling device (200, 300) according to any one of claims 1 to 5, wherein the fluid guiding part (25, 35) is a channel that covers the opening of the introduction channel (23, 33) on the housing part side, and extends toward the bottom surface of the housing part (22,32).

7. A fluid handling method in which a fluid is handled using the fluid handling device (200, 300) according to any one of claims 1 to 6, comprising;
introducing the fluid into the housing part (22, 32) through the introduction channel (23,33) and the fluid guiding part (25, 35) by sucking air in the housing part (22, 32) through the suction channel (24,34).

## Patentansprüche

1. Fluidhandhabungsvorrichtung (200, 300), die dazu eingerichtet ist, ein Fluid in einem Gehäuseteil (22, 32) aufzunehmen, wobei die Fluidhandhabungsvorrichtung (200, 300) umfasst:
das Gehäuseteil (22, 32), das eine Seitenfläche und eine Bodenfläche umfasst und zum Aufnehmen des Fluids eingerichtet ist;
einen Einleitungskanal (23, 33), der dazu eingerichtet ist, das Fluid zum Gehäuseteil (22, 32) zu befördern;
ein Fluidleitteil (25, 35), das mit einer Öffnung des Einleitungskanals (23, 33) in dem Gehäuseteil (22, 32) verbunden und dazu eingerichtet ist, das Fluid vom Einleitungskanal (23, 33) zur Bodenfläche des Gehäuseteils (22, 32) zu leiten; und
einen Saugkanal (24, 34), der eine Öffnung an der Seitenfläche des Gehäuseteils (22, 32) umfasst, wobei das Fluid flüssig ist, **dadurch gekennzeichnet, dass**
das Fluidleitteil (25, 35) ein halbsäulenförmiges oder prismenförmiges Element ist, das auf der Seitenfläche des Gehäuseteils (22, 32) angeordnet ist; und
ein Ausschnitt derart in dem Fluidleitteil (25, 35) ausgebildet ist, dass das Fluidleitteil (25, 35) mit einer Nadel oder dergleichen zur Seitenfläche des Gehäuseteils hin gebogen oder geklappt werden kann.

2. Fluidhandhabungsvorrichtung (200, 300) nach Anspruch 1,
wobei die Fluidhandhabungsvorrichtung (200, 300) einen Aufbau hat, bei dem ein erstes Substrat (28a, 38a) und ein zweites Substrat (28b, 38b) gestapelt sind, wobei das erste Substrat (28a, 38a) den Einleitungskanal (23, 33), das Fluidleitteil (25, 35), den Saugkanal (24, 34) und einen ersten Gehäuseteil (22a, 32a) umfasst und das zweite Substrat (28b, 38b) einen zweiten Gehäuseteil (22b, 32b) umfasst, der die Bodenfläche umfasst; und
wobei das Gehäuseteil (22, 32) den ersten Gehäuseteil (22a, 32a) und den zweiten Gehäuseteil (22b, 32b) umfasst.

3. Fluidhandhabungsvorrichtung (200, 300) nach Anspruch 2, wobei das zweite Substrat (28b, 38b) lösbar auf dem ersten Substrat (28a, 38a) angebracht ist.

4. Fluidhandhabungsvorrichtung (300) nach Anspruch 3,
wobei das erste Substrat (38a) umfasst:
ein drittes Substrat (38c), das den Einleitungskanal (33), das Fluidleitteil (35), den Saugkanal (34) und einen dritten Gehäuseteil (32c) umfasst, und
ein Verbindungselement (384), das ein Anschlussteil (385) sowie einen vierten Gehäuseteil (32d) und ein zweites Leitteil (35b), die in dem Anschlussteil (385) ausgebildet sind, umfasst, wobei das Anschlussteil (385) an den dritten Gehäuseteil (32c) des dritten Substrats (38c) und den zweiten Gehäuseteil (32b) des zweiten Substrats (38b) montiert ist; und
wobei der erste Gehäuseteil (32a) den dritten Gehäuseteil (32c) und den vierten Gehäuseteil (32d) umfasst.

5. Fluidhandhabungsvorrichtung (200, 300) nach einem der Ansprüche 1 bis 4, wobei ein Abstand von der Bodenfläche des Gehäuseteils zum Fluidleitteil (25, 35) kürzer als ein Abstand von der Bodenfläche des Gehäuseteils (22, 32) zu der Öffnung des Saugkanals (24, 34) ist.

6. Fluidhandhabungsvorrichtung (200, 300) nach einem der Ansprüche 1 bis 5, wobei das Fluidleitteil (25, 35) ein Kanal ist, der die Öffnung des Einleitungskanals (23, 33) auf der Gehäuseteilseite bedeckt und sich in Richtung der Bodenfläche des Gehäuseteils (22, 32) erstreckt.

7. Fluidhandhabungsverfahren, bei dem ein Fluid unter Verwendung der Fluidhandhabungsvorrichtung (200, 300) nach einem der Ansprüche 1 bis 6 gehandhabt wird, umfassend:
Einleiten des Fluids in das Gehäuseteil (22, 32) durch den Einleitungskanal (23, 33) und das Fluidleitteil (25, 35) durch Ansaugen von Luft in das Gehäuseteil (22, 32) durch den Saugkanal (24, 34).

## Revendications

1. Dispositif de manipulation de fluide (200, 300) conçu pour loger un fluide dans une partie de boîtier (22, 32), le dispositif de manipulation de fluide (200, 300) comprenant :
la partie de boîtier (22, 32) comprenant une surface latérale et une surface inférieure et étant conçue pour loger le fluide ;
un canal d'introduction (23, 33) conçu pour transporter le fluide vers la partie de boîtier (22, 32) ;
une partie de guidage de fluide (25, 35) reliée à une ouverture du canal d'introduction (23, 33) dans la partie de boîtier (22, 32) et conçue pour transporter, vers la surface inférieure de la partie de boîtier (22, 32), le fluide provenant du canal d'introduction (23, 33) ; et
un canal d'aspiration (24, 34) comprenant une ouverture au niveau de la surface latérale de la partie de boîtier (22, 32), le fluide étant liquide, **caractérisé en ce que**
la partie de guidage de fluide (25, 35) est un élément présentant une forme semi-colonnaire ou une forme de prisme disposé sur la surface latérale de la partie de boîtier (22, 32) ; et
une découpe est formée dans la partie de guidage de fluide (25, 35), de telle sorte que la partie de guidage de fluide peut être courbée ou pliée par une aiguille ou similaire vers la surface latérale de la partie de boîtier.

2. Dispositif de manipulation de fluide (200, 300) selon la revendication 1,
le dispositif de manipulation de fluide (200, 300) présentant une structure dans laquelle un premier substrat (28a, 38a) et un deuxième substrat (28b, 38b) sont empilés, le premier substrat (28a, 38a) comprenant le canal d'introduction (23, 33), la partie de guidage de fluide (25, 35), le canal d'aspiration (24, 34) et une première partie de boîtier (22a, 32a), le deuxième substrat (28b, 38b) comprenant une deuxième partie de boîtier (22b, 32b) comprenant la surface inférieure ; et
la partie de boîtier (22, 32) comprenant la première partie de boîtier (22a, 32a) et la deuxième partie de boîtier (22b, 32b).

3. Dispositif de manipulation de fluide (200, 300) selon la revendication 2, le deuxième substrat (28b, 38b) étant fixé de manière amovible sur le premier substrat (28a, 38a).

4. Dispositif de manipulation de fluide (300) selon la revendication 3,
le premier substrat (38a) comprenant :
un troisième substrat (38c) comprenant le canal d'introduction (33), la partie de guidage de fluide (35), le canal d'aspiration (34) et une troisième partie de boîtier (32c) et
un élément d'accouplement (384) comprenant une partie d'ajustement (385), une quatrième partie de boîtier (32d) et une deuxième partie de guidage (35b) formée dans la partie d'ajustement (385), la partie d'ajustement (385) étant ajustée à la troisième partie de boîtier (32c) du troisième substrat (38c) et à la deuxième partie de boîtier (32b) du deuxième substrat (38b) ; et
la première partie de boîtier (32a) comprenant la troisième partie de boîtier (32c) et la quatrième partie de boîtier (32d).

5. Dispositif de manipulation de fluide (200, 300) selon l'une quelconque des revendications 1 à 4, une distance depuis la surface inférieure de la partie de boîtier à la partie de guidage de fluide (25, 35) étant plus courte qu'une distance depuis la surface inférieure de la partie de boîtier (22, 32) à l'ouverture du canal d'aspiration (24, 34).

6. Dispositif de manipulation de fluide (200, 300) selon l'une quelconque des revendications 1 à 5, la partie de guidage de fluide (25, 35) étant un canal qui recouvre l'ouverture du canal d'introduction (23, 33) sur le côté de la partie de boîtier et qui s'étend vers la surface inférieure de la partie de boîtier (22, 32).

7. Procédé de manipulation de fluide dans lequel un fluide est manipulé à l'aide du dispositif de manipulation de fluide (200, 300) selon l'une quelconque des revendications 1 à 6, comprenant :
l'introduction du fluide dans la partie de boîtier (22, 32) à travers le canal d'introduction (23, 33) et la partie de guidage de fluide (25, 35) par aspiration d'air dans la partie de boîtier (22, 32) à travers le canal d'aspiration (24, 34).
